# FASCICULE DE BREVET EUROPEEN

(11) **EP 1 259 387 B1**
(45) Date de publication et mention de la délivrance du brevet: **30.11.2005**
(21) Numéro de dépôt: 01911589.8
(22) Date de dépôt: 05.02.2001
(51) Int. Cl.: B60B 21/10

(54) **JANTE ET ENSEMBLE D'UNE TELLE JANTE AVEC UN APPUI DE SOUTIEN**
FELGE UND EINHEIT AUS FELGE UND STÜTZAUFLAGE
RIM AND SUCH A RIM ASSEMBLY WITH SAFETY SUPPORT

(30) Priorité: 21.02.2000 FR 0002146
(43) Date de publication de la demande: 27.11.2002
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: POMPIER, Jean-Pierre, F-63530 Volvic (FR)
(74) Mandataire: Diernaz, Christian
(86) Numéro de dépôt international: PCT/EP2001/001186
(87) Numéro de publication internationale: WO 2001/062524

(56) Documents cités:
- FR-A- 2 699 121
- FR-A- 2 713 557
- FR-A- 2 713 558

## Description

La présente invention concerne une jante de montage monobloc, du type décrit dans le document FR 2699 121, pour un pneumatique à carcasse radiale, et formant avec un anneau de soutien de bande de roulement et ledit pneumatique un ensemble roulant se voulant particulièrement utile dans le cas d'un roulage où la pression de gonflage s'abaisse anormalement par rapport à la pression recommandée, la dite pression de service pouvant devenir nulle. Elle concerne aussi ledit ensemble.

Le brevet EP 0 673 324 décrit, en vue de remédier aux difficultés ci-dessus, un ensemble roulant composé d'un pneumatique et comprenant une jante monobloc avec deux sièges de jante dits inclinés vers l'extérieur et prolongés axialement vers l'extérieur par deux saillies ou humps de faible hauteur. Le siège du bord de jante qui sera situé à l'extérieur du véhicule est prolongé axialement vers l'intérieur par une portée destinée et adaptée à recevoir un appui de soutien de bande de roulement, alors que le siège situé du côté intérieur véhicule est prolongé axialement vers l'intérieur par un rebord de jante, rebord relié à la portée par l'intermédiaire d'une gorge de montage. La variante préférentielle de ladite jante comporte deux sièges inclinés vers l'extérieur et de diamètres inégaux, le siège généralement situé du côté extérieur véhicule ayant un diamètre inférieur au diamètre du siège situé du côté intérieur du véhicule.
La différence de diamètres entre les deux sièges peut rendre inutile la présence de la gorge de montage proche du deuxième siège de jante ayant le diamètre le plus grand, l'extrémité axialement intérieure dudit deuxième siège de jante étant relié à la portée d'appui de soutien de bande de roulement par une nervure de hauteur faible, voire nulle. L'appui de soutien de l'ensemble qui est un appui en matériau élastomérique déformable de manière élastique, ovalisable, et enfilable sur la portée peut avoir une largeur axiale égale à la distance séparant axialement les deux bourrelets. Ledit appui de soutien de bande de roulement, comme son nom l'indique à empêcher l'affaissement de la bande de roulement et permettre ainsi au pneumatique de rouler sous une flèche acceptable malgré le manque ou l'absence de gaz de gonflage, tout en maintenant fermement le bourrelet extérieur du pneumatique en position sur son siège de jante.

Un ensemble roulant tel que décrit ci-dessus comprend un appui de soutien de bande de roulement et doit comprendre un tel appui, sous peine de ne pas avoir à sa disposition un élément de sécurité indispensable dans le roulage dit en mode dégradé, c'est-à-dire lorsque la pression de gonflage du pneumatique devient faible, voire nulle.

Afin d'éviter le montage et l'utilisation d'un tel ensemble roulant sans un appui de soutien de bande de roulement, l'invention propose une jante comprenant deux sièges de jante de diamètres différents, inclinés vers l'extérieur et prolongés axialement vers l'extérieur par deux saillies de faible hauteur, le siège de jante de plus petit diamètre étant réunie axialement vers l'intérieur à une portée d'appui par l'intermédiaire d'une portion tronconique et le siège de jante de plus grand diamètre étant réunie axialement vers l'intérieur à ladite portée par une nervure de hauteur faible dont la paroi axialement intérieure a une génératrice faisant avec l'axe de rotation un angle ouvert radialement et axialement vers l'extérieur au plus égal à 30°, caractérisée en ce que ladite nervure, ayant une paroi axialement intérieure de largeur axiale au plus égale à la largeur axiale dudit deuxième siège, est pourvue circonférentiellement d'au moins deux rainures transversales de petite dimension.

Il faut entendre par siège incliné vers l'extérieur un siège dont l'extrémité axialement intérieure est un cercle de plus grand diamètre que le cercle de l'extrémité axialement extérieure. De même, le diamètre d'un siège de jante est le diamètre de son extrémité de plus grand diamètre. Il faut entendre par saillie de faible hauteur, compte tenu des dimensions de jantes concernées et des dimensions de pneumatiques appelés à être montés sur les dites jantes, une saillie dont la hauteur est au plus égale à 2,5% du diamètre minimum de la portée de jante. Une hauteur faible de nervure est de manière semblable une hauteur au plus égale à 2,5% du diamètre minimum de la portée de jante.

La jante ci-dessus, du fait de la présence combinée de la pente et des évidements de la portion tronconique reliant la portée d'appui de soutien de bande de roulement et l'extrémité axialement intérieure du siège de jante, ne permet pas l'étanchéité primaire nécessaire au gonflage du pneumatique.

L'allégement de l'ensemble roulant ainsi formé étant de manière constante souhaitable, il est particulièrement avantageux de munir la jante de montage simultanément d'une rainure circonférentielle, localisée du côté du siège de plus petit diamètre et partageant la portée d'appui de soutien en deux zones distinctes. L'appui de soutien de bande de roulement peut avoir une largeur axiale égale à la distance séparant les parois intérieures des deux bourrelets de pneumatique est se trouve disposé sur toute la largeur de la portée de jante. Ledit appui peut aussi avoir une largeur réduite, et se trouve alors disposé sur la seule zone de portée la plus proche du siège de jante de plus grand diamètre, comme décrit dans la demande FR 99/10108. Ledit appui possède dans ce cas une base munie sur sa face radialement intérieure d'un protubérance venant lors dudit montage se loger dans une rainure circonférentielle prévue à cet effet sur la portée de la jante, rainure plus proche de l'extrémité de la zone d'appui située du côté du siège de plus petit diamètre que l'extrémité de la dite zone plus proche du siège de jante de plus grand diamètre. L'appui de soutien de bande de roulement, quelle que soit sa largeur axiale, pousse axialement vers l'extérieur, lors du montage, le bourrelet de plus grand diamètre afin que ce dernier se pose de lui-même sur son siège de jante.

Une meilleure maîtrise du montage de l'ensemble pneumatique-appui est obtenue grâce à la présence, axialement entre l'extrémité intérieure de la paroi intérieure de la nervure proche du siège de jante de plus grand diamètre et l'extrémité de la portée de jante, d'une rainure circonférentielle de faible dimension, ce qui permet, lors du mouvement du bourrelet de plus grand diamètre sur la jante, de légèrement se bloquer dans ladite rainure, la résistance offerte à la poussée devenant signe avertisseur de l'emplacement dudit bourrelet, et la deuxième résistance trouvée étant la dernière puisque résistance due à la saillie axialement extérieure de la jante.

L'invention sera mieux comprise à l'aide du dessin annexé à la description illustrant des exemples non limitatifs d'exécution d'un ensemble d'une jante et d'un appui de soutien pour montage d'un pneumatique, dessin sur lequel :
* la figure 1 représente schématiquement, vu en section méridienne, un premier ensemble jante-appui de soutien conforme à l'invention,
* la figure 2 représente de manière agrandie une rainure transversale de petite dimension,
* la figure 3 représente schématiquement une deuxième variante d'ensemble conforme à l'invention,
* la figure 4 montre une troisième variante d'ensemble conforme à l'invention.

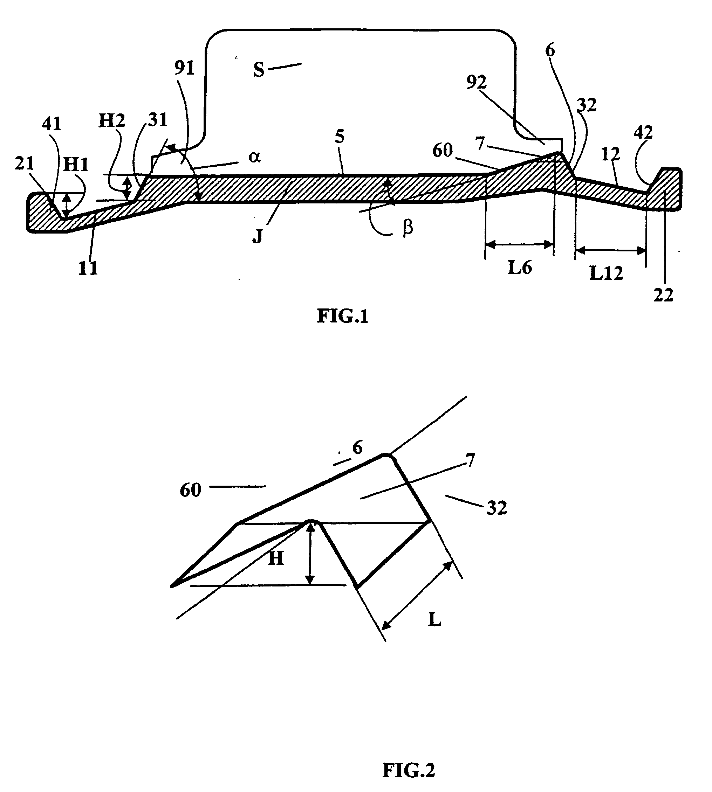

La jante J, montrée sur la figure 1, comprend deux sièges de jante 11 et 12, chaque siège étant incliné vers l'extérieur, c'est-à-dire dont l'extrémité axialement extérieure est un cercle de diamètre plus petit que le diamètre du cercle formant l'extrémité axialement intérieure. Les deux sièges sont respectivement réunis axialement à l'extérieur à deux saillies 21 et 22 dont les parois axialement intérieures 41 et 42 ont une faible hauteur h₁, c'est-à-dire une hauteur au plus égale à 2,5% du diamètre minimum de la portée 5 de jante. Les deux sièges 11 et 12 sont prolongés axialement vers l'intérieur par deux portions tronconiques 31 et 32 de hauteur h₂ au moins égale à 0,01 fois le diamètre de la portée 5, les dites portions 31 et 32 ayant des génératrices faisant avec l'axe de rotation un angle α ouvert axialement vers l'intérieur et radialement vers l'extérieur au moins égal à 45°. Du côté du premier siège de jante 11, préférentiellement du côté extérieur du véhicule, la portion 31 est directement reliée à la portée de jante 5, alors de l'autre côté de la jante J ou côté du deuxième siège de jante 12, la portion tronconique 32 qui est paroi axialement extérieure de la nervure 6 est réunie à la portée 5 par l'intermédiaire d'une paroi tronconique 60, de largeur axiale L₆ inférieure à la largeur L₁₂ du siège 12 de jante et dont la génératrice fait avec l'axe de rotation un angle β ouvert axialement et radialement vers l'extérieur inférieur à 30°. L'appui S est un appui usuel en caoutchouc dont la largeur axiale est égale à la distance séparant les deux extrémités axialement intérieures des portions 31 et 32, ledit appui ayant, comme connu en soi, une base plus large que le corps principal, les deux renforts 91 et 92 venant bloquer les deux bourrelets du pneumatique (non montrés) sur leurs sièges respectifs. La nervure 6 est pourvue de quatre rainures ou encoches transversales 7 circonférentiellement équidistantes, une de ces encoches étant montrée sur la figure 2. La largeur d'une encoche est égale à 4 mm et dans tous les cas inférieure à 10 mm, alors que sa hauteur h est égale à 2 mm et inférieure à 3 mm, les dites dimensions permettant de dire que l'encoche est de petite dimension.

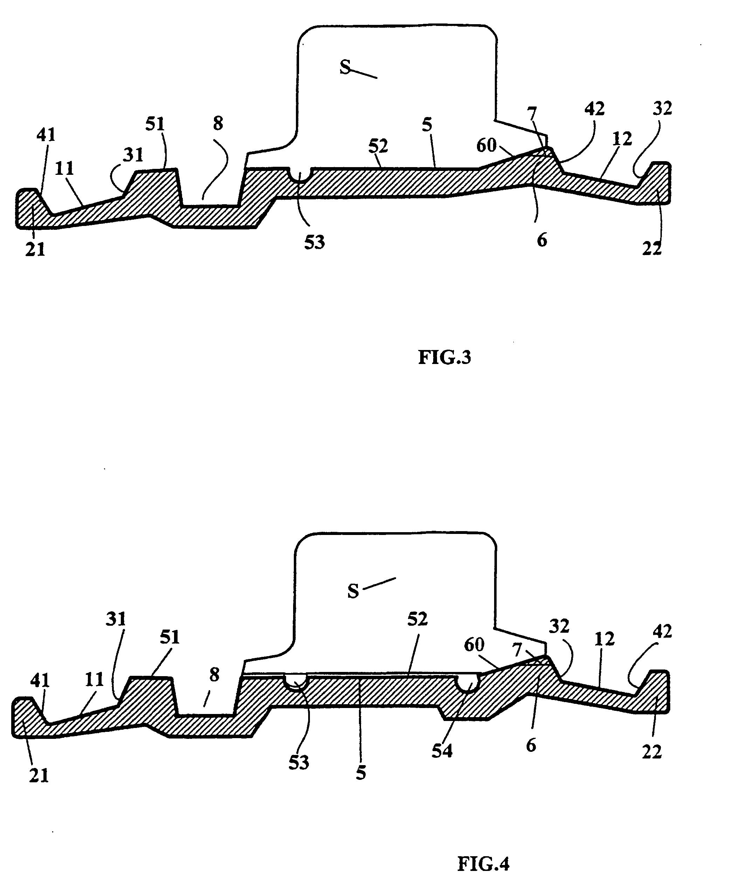

La variante d'ensemble montrée sur la figure 3 est composée d'une jante J ayant une portée de jante 5 divisée en deux zones d'appui 51 et 52 séparées axialement par une rainure circonférentielle 8. La zone d'appui 52, la plus proche du deuxième siège de jante 12 est pourvue sur sa base d'une rainure circonférentielle 53 dans laquelle vient se loger la protubérance 9 de l'appui de soutien S.

Quant à la variante montrée sur la figure 4, elle diffère de celle de la figure 3 par la présence d'une rainure circonférentielle 54 assurant la jonction entre l'extrémité axialement extérieur de la deuxième zone d'appui 52 et la portion tronconique 60, qui dans le cas décrit directement prolongée axialement vers l'extérieur par le deuxième siège de jante 12 incliné vers l'extérieur. Cette deuxième rainure circonférentielle 54 placée juste avant la paroi 60 crée un léger arrêt du mouvement axial du deuxième bourrelet du pneumatique lors du montage associé à la rotation possible du bourrelet du pneumatique.

## Revendications

1. Jante J comprenant deux sièges de jante (11, 12) de diamètres différents, inclinés vers l'extérieur et prolongés axialement vers l'extérieur par deux saillies (21, 22) de faible hauteur, le siège de jante (11) de plus petit diamètre étant réuni axialement vers l'intérieur à une portée d'appui (5) par l'intermédiaire d'une portion tronconique (31) et le siège de jante (12) de plus grand diamètre étant réuni axialement vers l'intérieur à ladite portée (5) par une nervure (6) de hauteur faible, cette nervure (6) comprenant au moins une paroi tronconique axialement intérieure (60) dont la génératrice fait avec l'axe de rotation un angle β, ouvert radialement et axialement vers l'extérieur, différent de 0° et au plus égal à 30°, cette paroi tronconique axialement intérieure (60) étant limitée radialement à l'extérieur par une arête **caractérisée en ce que** ladite paroi tronconique axialement intérieure (60), ayant une largeur axiale L6 au plus égale à la largeur axiale L12 dudit deuxième siège (12), est pourvue circonférentiellement d'au moins deux rainures (7) transversales de petite dimension coupant l'arête radialement la plus à l'extérieur de ladite paroi tronconique axialement intérieure (60).

2. Jante selon la revendication 1, **caractérisé en ce que** la portée (5) de la jante de montage J est divisée en deux zones d'appui (51) et (52) séparées axialement d'une rainure circonférentielle (8), localisée du côté du siège (11) de plus petit diamètre.

3. Jante selon la revendication 2, **caractérisée en ce que** la zone d'appui (52) est pourvue d'une autre rainure circonférentielle (53), plus proche de l'extrémité de la zone d'appui (52) située du côté du siège de plus petit diamètre que l'extrémité de la dite zone plus proche du siège de jante de plus grand diamètre.

4. Jante selon l'une des revendications 1 à 3, **caractérisé en ce que** la face extérieure de jante est munie d'une rainure circonférentielle (54) de faible dimension, disposée axialement entre l'extrémité intérieure de la paroi intérieure (60) de la nervure (6) proche du siège de jante (12) de plus grand diamètre et l'extrémité de la portée
de jante (5), la paroi (60) de la nervure -6) étant directement reliée au siège de jante (12) de plus grand diamètre.

5. Ensemble formé d'une jante selon l'une des revendications 1 à 4 et d'un appui de soutien de bande de roulement S, **caractérisé en ce que** l'appui de soutien a une largeur axiale égale à la distance séparant les deux parois intérieures des bourrelets du pneumatique monté sur sa jante J.

6. Ensemble formé d'un jante selon l'une des revendications 3 ou 4, et d'un appui de soutien de bande de roulement S, **caractérisé en ce que** l'appui de soutien a une largeur axiale égale à la largeur de la zone d'appui (52) et est munie sur sa base d'une protubérance (9) venant lors du montage se loger dans la rainure (S3) de la zone (52).

## Patentansprüche

1. Felge J, die zwei Felgensitze (11, 12) unterschiedlichen Durchmessers aufweist, die nach außen geneigt sind und in Axialrichtung nach außen durch zwei Schultern (21, 22) geringer Höhe verlängert sind, wobei der Felgensitz (11), der den kleineren Durchmesser aufweist, in Axialrichtung nach innen über einen kegelstumpfförmigen Bereich (31) mit einer Auflagefläche (5) verbunden ist und der Felgensitz (12), der den größeren Durchmesser aufweist, in Axialrichtung nach innen über eine Rippe (6) geringer Höhe mit der Auflagefläche (5) verbunden ist, wobei die Rippe (6) mindestens eine axial innen liegende kegelstumpfförmige Wand (60) aufweist, deren Mantellinie mit der Drehachse einen Winkel β bildet, der sich in Radialrichtung und in Axialrichtung nach außen öffnet, von 0° verschieden ist und höchstens gleich 30° ist, und die axial innen liegende kegelstumpfförmige Wand (60) in Radialrichtung nach außen durch eine Kante begrenzt ist, **dadurch gekennzeichnet, dass** die axial innen liegende kegelstumpfförmige Wand (60), die eine axiale Breite L6 besitzt, die höchstens gleich der axialen Breite L12 des zweiten Felgensitzes (12) ist, am Umfang mit mindestens zwei Quernuten (7) kleiner Abmessung versehen ist, welche die radial am weitesten außen liegende Kante der axial innen liegenden kegelstumpfförmigen Wand (60) durchschneiden.

2. Felge nach Anspruch 1, **dadurch gekennzeichnet, dass** die Auflagefläche (5) der Montagefelge J in zwei Auflagezonen (51) und (52) unterteilt ist, die in Axialrichtung durch eine Umfangsnut (8) getrennt sind, die auf der Seite des Felgensitzes (11) mit dem kleineren Durchmesser angeordnet ist.

3. Felge nach Anspruch 2, **dadurch gekennzeichnet, dass** die Auflagezone (52) mit einer Umfangsnut (53) versehen ist, die näher zu dem Ende der Auflagezone (52), das sich auf der Seite des Felgensitzes mit dem kleineren Durchmesser befindet, als zu dem Ende der Auflagezone, das sich näher am Felgensitz mit dem größeren Durchmesser befindet, liegt.

4. Felge nach einem der Ansprüche 1 bis 3, **dadurch gekennzeichnet, dass** die Außenfläche mit einer Umfangsnut (54) kleiner Abmessung versehen ist, die in Axialrichtung zwischen dem inneren Ende der Wand (60) der Rippe (6) in der Nähe des Felgensitzes (12) mit dem größeren Durchmesser und dem Ende der Auflagefläche (5) der Felge vorgesehen ist, wobei die Wand (60) der Rippe (6) direkt mit dem Felgensitz (12) mit dem größeren Durchmesser verbunden ist.

5. Einheit aus einer Felge nach einem der Ansprüche 1 bis 4 und einer Stützauflage S für den Laufstreifen, **dadurch gekennzeichnet, dass** die Stützauflage eine axiale Breite besitzt, die gleich dem Abstand ist, der die beiden Innenwände der Wülste des auf der Felge J montierten Reifens trennt.

6. Einheit aus einer Felge nach Anspruch 3 oder 4 und einer Stützauflage S für den Laufstreifen, **dadurch gekennzeichnet, dass** die Stützauflage eine axiale Breite besitzt, die gleich der Breite der Auflagezone (52) ist und an ihrer Unterseite mit einem Vorsprung (9) versehen ist, der bei der Montage in der Umfangsnut (53) der Auflagezone (52) zu liegen kommt.

## Claims

1. Wheel rim J comprising two rim seats (11, 12) having different diameters, inclined outwards and extended axially outwards by two humps (21, 22) of small height, the rim seat (11) of smaller diameter being connected axially on the inside to a bearing surface (5) via a frustoconical portion (31) and the rim seat (12) of larger diameter being connected axially on the inside to the said bearing surface (5) by a rib of small height, this rib (6) having at least one axially interior frustoconical wall (60) whose generatrix makes, relative to the rotation axis, an angle β open radially and axially outwards which is different from 0° and at most equal to 30°, the said axially interior frustoconical wall (60) being delimited radially on the outside by an edge,
**characterised in that**
the said axially interior frustoconical wall (60), which has an axial width L₆ at most equal to the axial width L₁₂ of the said second seat 12, is provided circumferentially with at least two transverse grooves (7) of small size which intersect the radially outermost edge of the said axially interior frustoconical wall (60).

2. Rim according to Claim 1,
**characterised in that**
the bearing surface (5) of the mounting rim J is divided into two support zones (51) and (52) axially separated by a circumferential groove (8) located on the side of the seat (11) having the smaller diameter.

3. Rim according to Claim 2,
**characterised in that**
the support zone (52) is provided with another circumferential groove (53), closer to the end of the support zone (52) located on the side of the seat having a smaller diameter than the end of the said zone closer to the rim seat with larger diameter.

4. Rim according to any of Claims 1 to 3,
**characterised in that**
the outer face of the rim is provided with a circumferential groove (54) of small size arranged axially between the inside end of the inside wall (60) of the rib (6) close to the rim seat (12) having the larger diameter and the end of the rim's bearing surface (5), the wall (60) of the rib (6) being connected directly to the rim seat (12) having the larger diameter.

5. Assembly formed of a rim according to any of Claims 1 to 4 and a tread bearing support S,
**characterised in that**
the axial width of the bearing support is equal to the distance between the two inside walls of the beads of the tyre fitted on its rim J.

6. Assembly formed of a rim according to either of Claims 3 or 4 and a tread bearing support S,
**characterised in that**
the axial width of the bearing support is equal to the width of the support zone (52) and the bearing support is provided on its base with a protuberance (9) that lodges in the groove (53) of the zone (52) during the mounting operation.
